# EUROPEAN PATENT SPECIFICATION

(11) **EP 4 045 779 B1**
(45) Date of publication and mention of the grant of the patent: **04.10.2023**
(21) Application number: 20786598.1
(22) Date of filing: 16.09.2020
(51) Int. Cl.: F01P 7/16, F16K 11/07

(54) **FLUIDIC CONTROL DEVICE OF A VEHICLE**
FLUIDIKSTEUERUNGSVORRICHTUNG FÜR EIN FAHRZEUG
DISPOSITIF DE COMMANDE FLUIDIQUE D'UN VÉHICULE

(30) Priority: 14.10.2019 IT 201900018713
(43) Date of publication of application: 24.08.2022
(73) Proprietor: Industrie Saleri Italo S.P.A., 25065 Lumezzane, Brescia (IT)
(72) Inventor: SURACE, Alfonso, 25065 Lumezzane, Brescia (IT); PEDERSOLI, Marco, 25065 Lumezzane, Brescia (IT); CORNACCHIA, Simone, 25065 Lumezzane, Brescia (IT)
(74) Representative: Gamba, Alessandro
(86) International application number: PCT/IB2020/058594
(87) International publication number: WO 2021/074712

(56) References cited:
- GB-A- 2 383 840
- US-A- 5 251 588
- US-A- 6 047 895
- US-A1- 2005 000 473
- US-A1- 2009 294 710
- US-A1- 2015 101 789

## Description

The present invention relates to a fluidic control device of a thermal management assembly of a thermal regulation system of a vehicle. Additionally, the present invention relates to a thermal management assembly which comprises said fluidic control device. Furthermore, the present invention relates to the thermal regulation system of a vehicle which comprises said thermal management assembly. Finally, the present invention further relates to a vehicle, which comprises said thermal regulation system.

In other words, the present invention relates to the automotive field and in detail the thermal regulation system of a vehicle. In particular, the term "vehicle" refers to any means of transport without any limitation as to type or size, i.e. a motor car or a semi-articulated vehicle.

The need to manage the temperature of the operating groups of the vehicle to take them to and/or keep them in the best possible operating conditions (by cooling and/or heating them) is known in the prior art. In particular, hereinafter, "operating group" means a specific component or group of components for carrying out a given operation necessary for the motion of the vehicle. Therefore, for example, operating group means the endothermic engine group, or the battery group, or the gearbox group, or the transmission group, or the electric motor group for the management of the battery group.

In recent years, a multitude of hybrid-powered vehicle solutions has been suggested, in which a plurality of operating groups, such as the endothermic engine group, the battery group, and the electric motor group connected to said battery group, are necessarily present, each operating group having different needs. Indeed, each of said operating groups has a mutually different operating behavior, both while the vehicle is in motion and when it is stationary (e.g. the electric motor operating in situations with the endothermic engine in standby). Therefore, it is apparent that each operating group has different thermal management needs, for cooling and/or heating, as a function of the different operating situations of the vehicle. Examples of these known solutions are known in US6047895A and US2009/294710A1.

Vehicle solutions are thus known which comprise a specific thermal regulation system for each operating group, in which a specific amount of working fluid circulates. In such embodiments, each specific thermal regulation system is designed independently, requiring specific components (e.g. specific pump groups).

In this context, the problem of having, managing, having, and producing a plurality of thermal regulation systems in the same vehicle is thus apparent.

Therefore, the main problem present in this field is that of having, accommodating, and managing a multitude of components necessary for the thermal management of each envisaged operating group on the same vehicle.

Given the above, the need to solve the aforesaid technical problems is strongly felt.

Therefore, it is the object of the present invention to provide a new fluidic control device by means of which this need is satisfied.

Such an object is achieved by a fluidic control device as claimed in claim 1. Furthermore, such an object is achieved by a thermal management assembly, which comprises said fluidic control assembly according to claim 9. Similarly, such an object is achieved by a thermal regulation system of a vehicle, which comprises such a thermal management assembly, as claimed in claim 10. Furthermore, such an object is achieved by a vehicle, which comprises the thermal regulation system according to claim 11.

The claims dependent thereon show preferred variants implying further advantageous aspects.

Further features and advantages of the invention will become apparent from the description provided below of preferred embodiments thereof, given by way of nonlimiting examples, with reference to the accompanying drawings, in which:

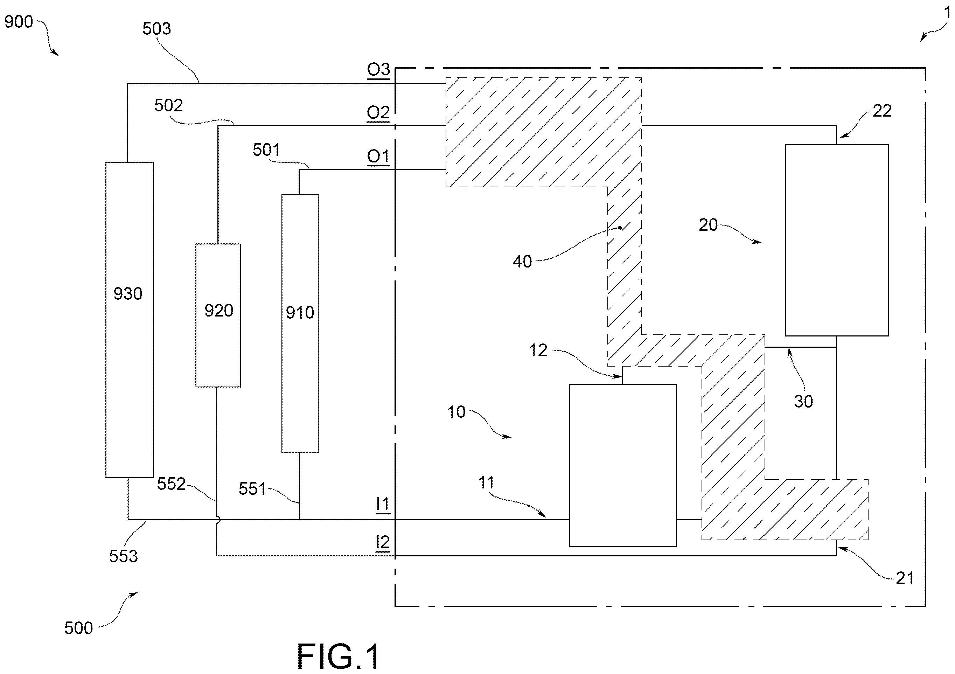

- figure 1 diagrammatically shows a thermal regulation system according to an embodiment of the present invention;

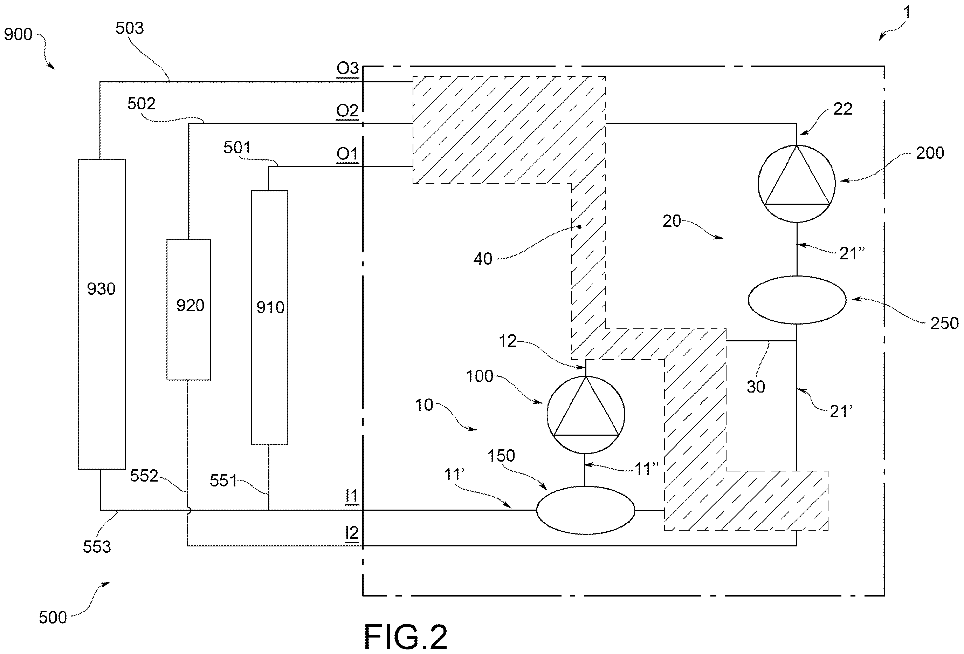

- figure 2 diagrammatically shows the thermal regulation system according to a further embodiment of the present invention;

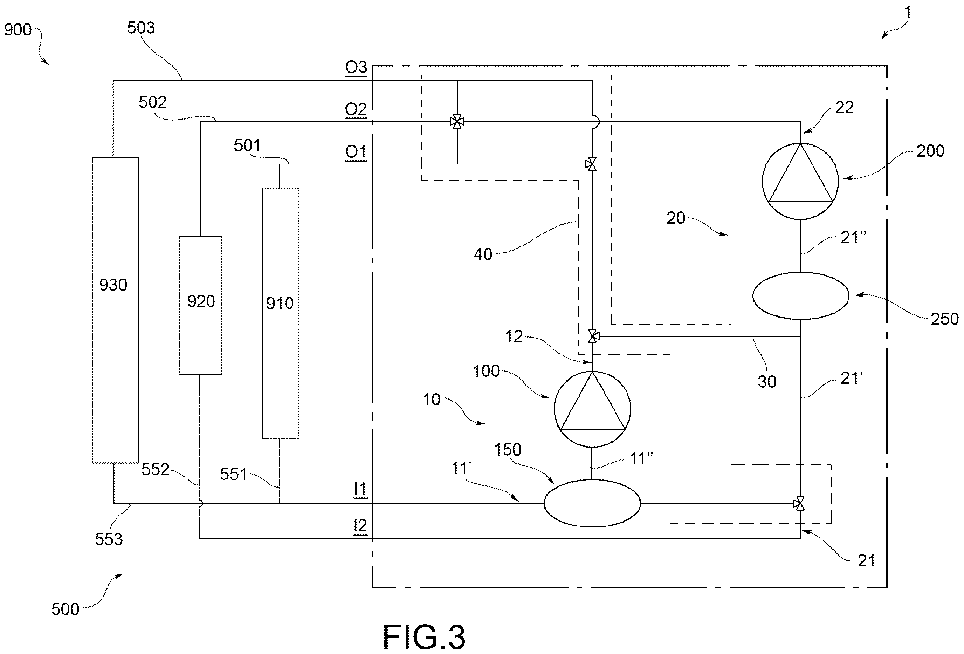

- figure 3 diagrammatically shows the thermal regulation system according to yet another preferred embodiment of the present invention;
- figures 4', 4" and 4" diagrammatically show three views of the thermal regulation system according to the embodiment shown in figure 3, in three respective different operating configurations;

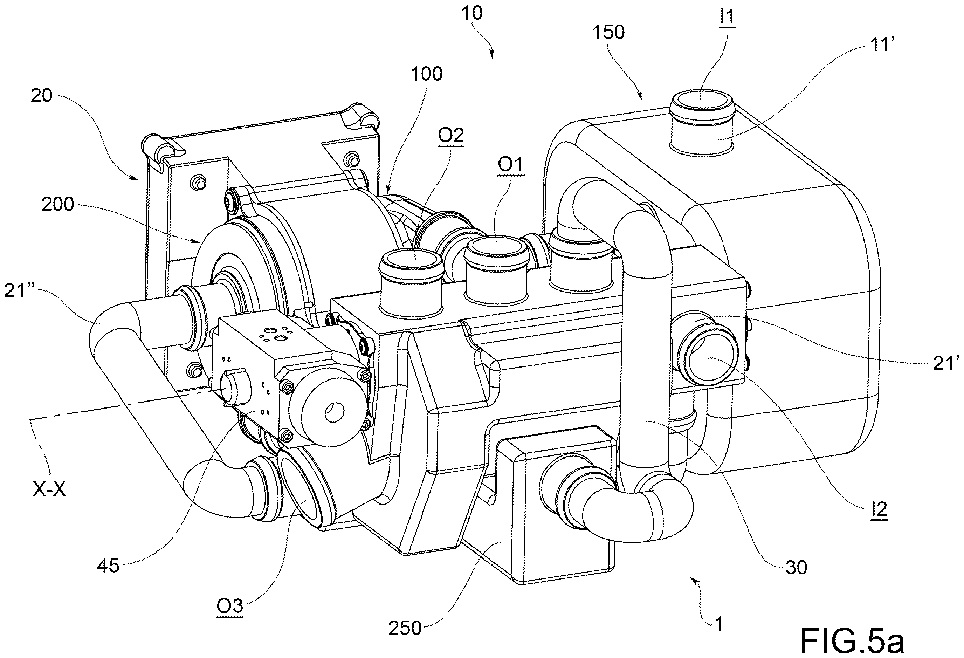

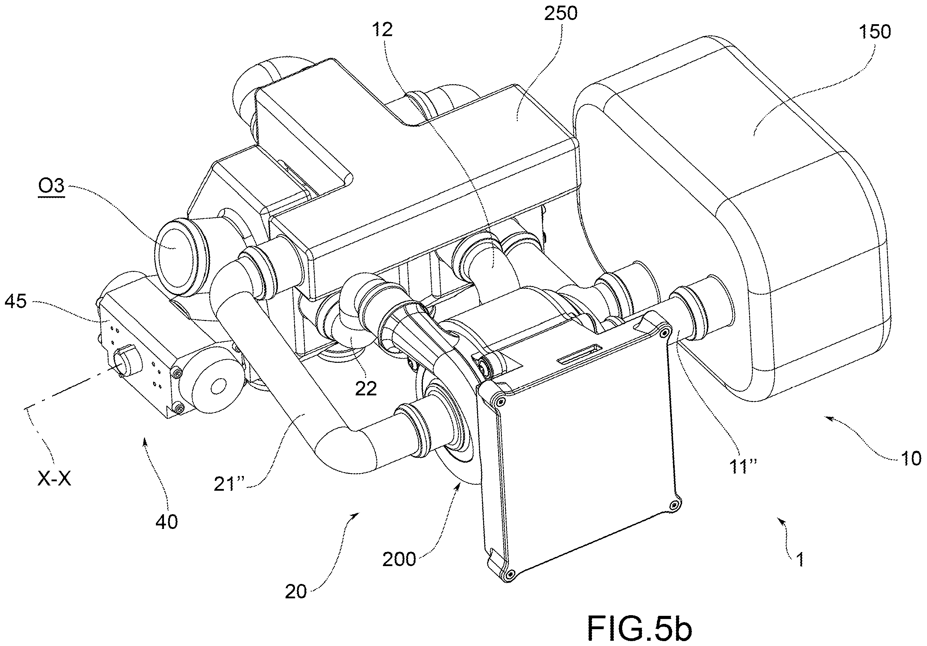

- figures 5a and 5b show two perspective views of the thermal management assembly of the present invention according to a third preferred embodiment;

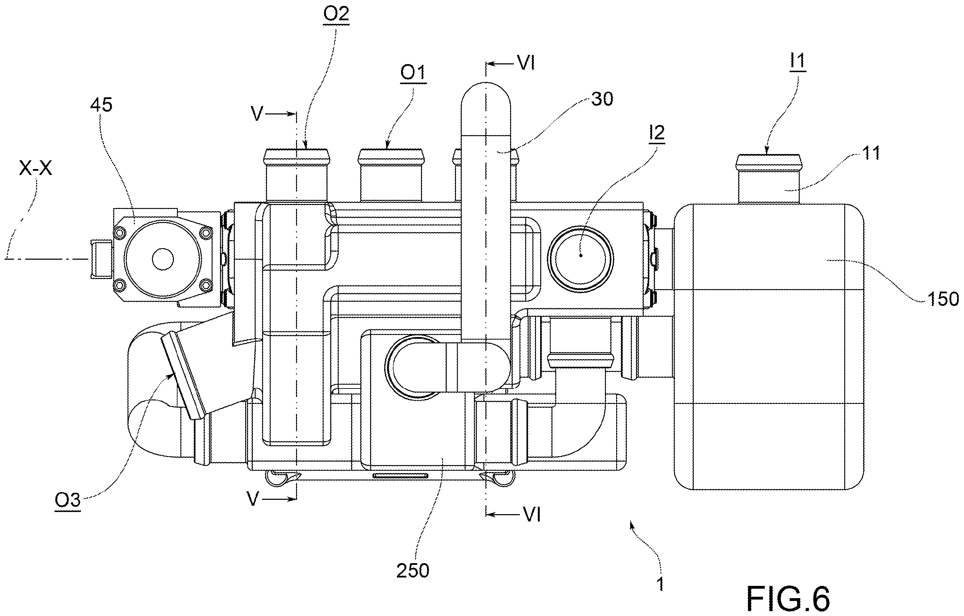

- figure 6 is a side view of the thermal management assembly in figures 5a and 5b;

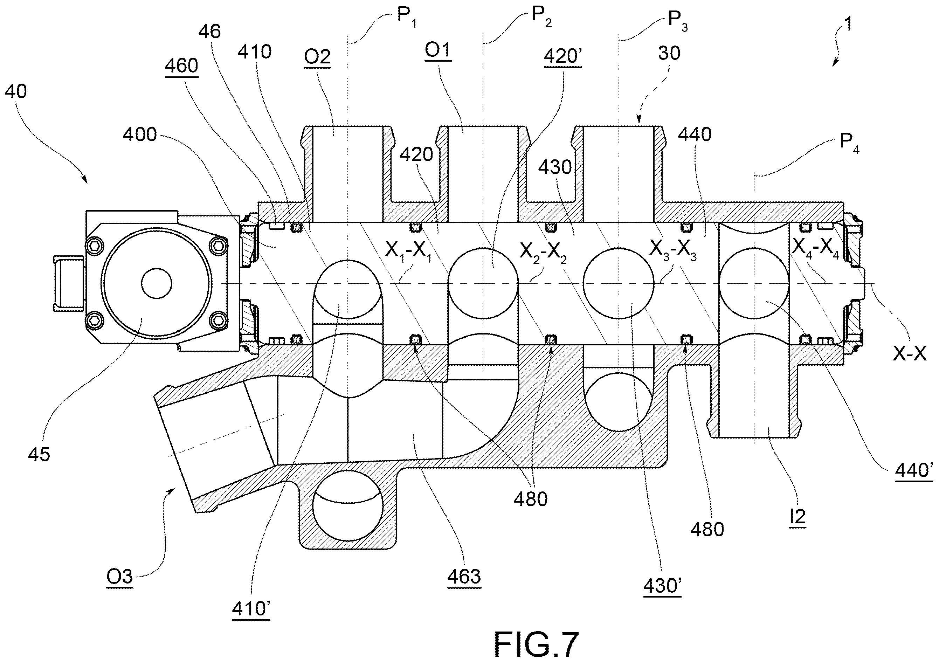

- figure 7 is a longitudinal section view of the thermal management assembly in figure 6;

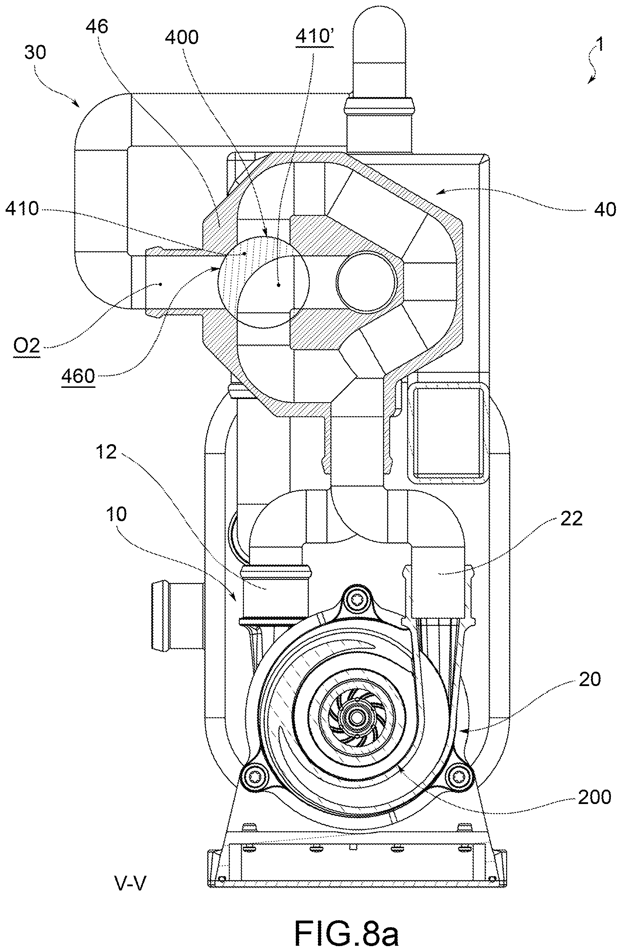

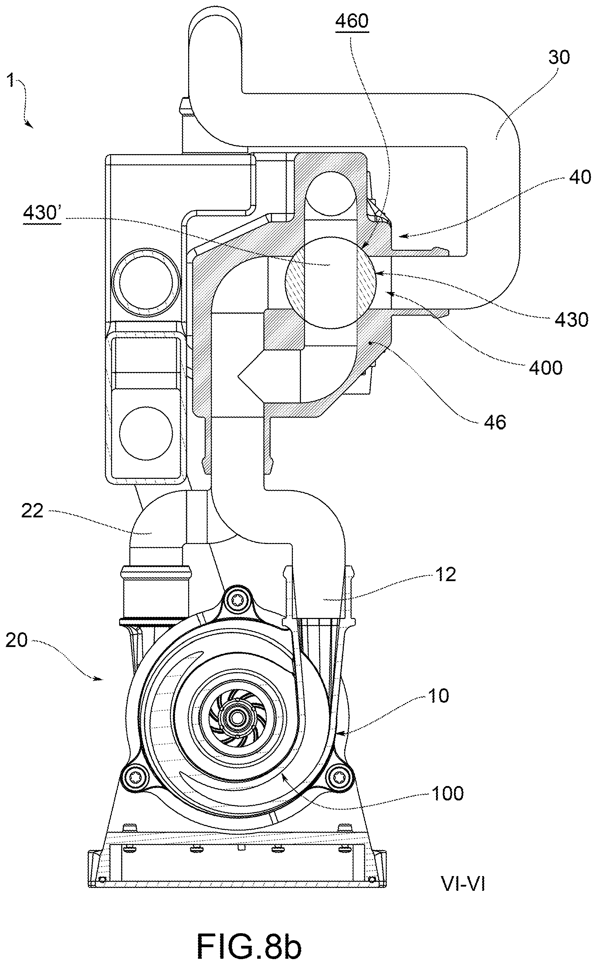

- figures 8a and 8b are two cross-sectional views of the thermal management assembly taken along the section planes V-V and VI-VI in figure 6;

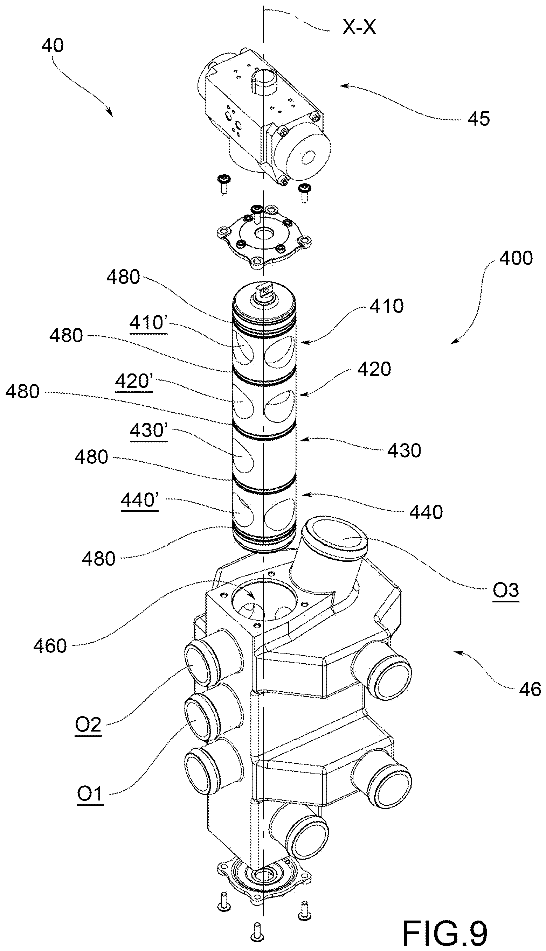

- figure 9 shows a perspective view with parts separated of the fluidic control device included in the thermal management assembly shown in the figures above.

In the appended figures, reference numeral 1 indicates as a whole a thermal management assembly of a thermal regulation system 500 of a vehicle 900, according to a preferred embodiment of the present invention.

In the appended figures, reference numeral 500 indicates a thermal regulation system 500 which comprises the thermal management assembly 1.

A vehicle 900 which comprises the thermal regulation system 500 is not shown, except diagrammatically, but is also the subject of the present invention. Preferably, said vehicle 900 is hybrid-powered, i.e. it combines both the power supply of an electric motor group and the power supply of a battery group.

Preferably, the vehicle 900 comprises a first operating group 910, a second operating group 920, and a third operating group 930.

Each operating group corresponds to a "load". In particular, each operating group corresponds to a respective component or group of components included in the vehicle 900 and preferably belonging to the power supply of the vehicle 900.

Preferably, the first operating group 910 is an electric motor group.

Preferably, the second operating group 920 is a battery group.

Preferably, the third operating group 930 is an endothermic engine group.

According to the present invention, the first operating group 910, the second operating group 920, and the third operating group 930 are fluidically connected to the thermal regulation system 500, i.e. fluidically connected to the thermal management assembly 1.

Preferably, the first operating group 910, the second operating group 920, and the third operating group 930 are fluidically connected by means of a plurality of system ducts 501, 502, 503, 551, 552, 553 included in the thermal regulation system 500. Preferably, the thermal regulation system 500 further comprises specific heat exchanger groups (not shown).

According to a preferred embodiment, the thermal regulation system 500 comprises at least one system inlet duct and at least one system outlet duct in fluidic connection with each operating group.

According to a preferred embodiment, the thermal management assembly 1 comprises a first pump group 10 suitable to control the motion of the working fluid comprising a first inlet duct 11 and a first outlet duct 12;

According to a preferred embodiment, the thermal management assembly 1 comprises a second pump group 20 suitable, in turn, to control the motion of the working fluid comprising a second inlet duct 21 and a second outlet duct 22.

According to a preferred embodiment, the first pump group 10 comprises a first control unit 100 comprising a first impeller which intercepts the working fluid flowing in the first inlet duct 11 to send it into the first outlet duct 12. Preferably, said first impeller is of the radial type, aspirating working fluid axially through the first inlet duct 11 to push it out tangentially towards the first outlet duct 12.

According to a preferred embodiment, the first pump group 10 further comprises a first stabilization tank 150 which divides the first inlet duct 11 into a first duct upstream section 11' and a first duct downstream section 11". In particular, said first stabilization tank 150 unifies the pressure of the flowing liquid before it reaches the first impeller included in the first control unit 100.

In other words, the working fluid reaches the first control unit 100 after having flowed in the first stabilization tank 150.

According to a preferred embodiment, the second pump group 20 comprises a second control unit 200 comprising a second impeller which intercepts the working fluid flowing in the second inlet duct 21 to send it into the second outlet duct 22. Preferably, said second impeller is of the radial type, aspirating working fluid axially through the second inlet duct 21 to push it out tangentially towards the second outlet duct 22.

According to a preferred embodiment, the second pump group 10 further comprises a second stabilization tank 250, which divides the second inlet duct 21 into a second duct upstream section 21' and a second duct downstream section 21". In particular, said second stabilization tank 250 unifies the pressure of the flowing liquid before it reaches the second impeller included in the second control unit 200.

In other words, the working fluid reaches the second control unit 200 after having flowed in the second stabilization tank 250.

According to a variant, the thermal management assembly 1 comprises a single fluid stabilization tank fluidically connected to both the first pump group 10 and the second pump group 20.

According to a variant, furthermore, the thermal management assembly 1 comprises an auxiliary duct 30 which fluidically connects the first pump group 10 and the second pump group 20.

Preferably, the auxiliary duct 30 fluidically connects the first outlet duct 12 to the second inlet duct 21.

Preferably, the auxiliary duct 30 fluidically connects the first outlet duct 12 to the second inlet duct 21, upstream of the second stabilization tank 250, i.e. preferably in the second duct upstream section 21'.

According to a preferred embodiment, in a predefined configuration, the first pump group 10 and the second pump group 20 are fluidically arranged in series by means of said auxiliary duct 30.

According to a preferred embodiment, the thermal management assembly 1 further comprises, a first inlet I1 and a second inlet I2 fluidically connected to the first inlet duct 11 and the second inlet duct 21, respectively.

Preferably, said first inlet I1 and second inlet I2 are fluidically connectable to the first operating group 910, the second operating group 920, and the third operating group 930. Preferably, indeed, first inlet I1 and said second inlet I2 are fluidically connectable to the system outlet ducts 551, 552, 553 included in the thermal regulation system 500.

According to a preferred embodiment, at least two outlet system ducts 551, 552, 553 are fluidically connected upstream of either the first inlet I1 or the second inlet I2 so that the working fluid flows into the same inlet upstream thereof.

In some variants, the thermal management assembly 1 further comprises other system inlets that are fluidically connectable to the system ducts.

The present invention relates to a fluidic control device 40 suitable to control the direction of predetermined amounts of working fluid. Preferably, the fluidic control device 40 is suitable to be part of the aforesaid thermal management assembly 1 being fluidically connectable to the aforesaid components. Preferably, the fluidic control device 40 is suitable to be fluidically connectable to the described pump groups and the described operating groups.

According to the present invention, the fluidic control device 40 comprises a first outlet O1, a second outlet O2 and a third outlet O3.

Preferably, said first outlet O1, said second outlet O2 and said third outlet O3 are fluidically connectable to the first operating group 910, the second operating group 920, and the third operating group 930, respectively. In other words, with thermal regulation system 500 installed in the vehicle 900, the working fluid flowing out of one of the three outlets flows to a respective operating group.

Furthermore, said first outlet O1, said second outlet O2 and said third outlet O3 are fluidically connected to the first outlet duct 12 and to the second outlet duct 22.

In particular, the fluidic control device 40 is suitable to manage the working fluid flow modes to an outlet (preventing the flow to the others) or to more than outlet at the same time.

In particular, the fluidic control device 40 isfluidically connectable to the first pair of ducts 11, 12 the second pair of ducts 21, 22, and the auxiliary duct 30. In this manner, the fluidic control device 40 is suitable to manage through which of these pipes the working fluid flows.

In particular, the fluidic control device 40 is fluidically connectable to the first outlet duct 12 and the second outlet duct 22. Preferably, the fluidic control device 40 is also fluidically connectable to the first inlet duct 11 and/or the second inlet duct 21.

Furthermore, the fluidic control device 40 is fluidically connectable to the auxiliary duct 30.

According to the present invention, the fluidic control device (40) is configurable in:
- a first working configuration, in which the flow of the working fluid, e.g. moved both by the first pump group 10 and by the second pump group 20, is regulated through the first outlet O1 and the second outlet O2, and the flow of the working fluid through the third outlet O3 and the auxiliary duct 30 is prevented;
- a second working configuration, in which the flow of the working fluid, e.g. moved both by the first pump group 10 and by the second pump group 20, is regulated through the third outlet O3 and the flow of the working fluid through the first outlet O1, through the second outlet O2, and through the auxiliary duct 30 is prevented;
- a third working configuration, in which the flow of the working fluid, e.g. moved from the first pump group 10 to the second pump group 20, is regulated through the auxiliary duct 30 and the flow of the working fluid exiting through the second outlet O2 is regulated, while the flow of the working fluid through the first outlet O1 and through the third outlet O3 is prevented.

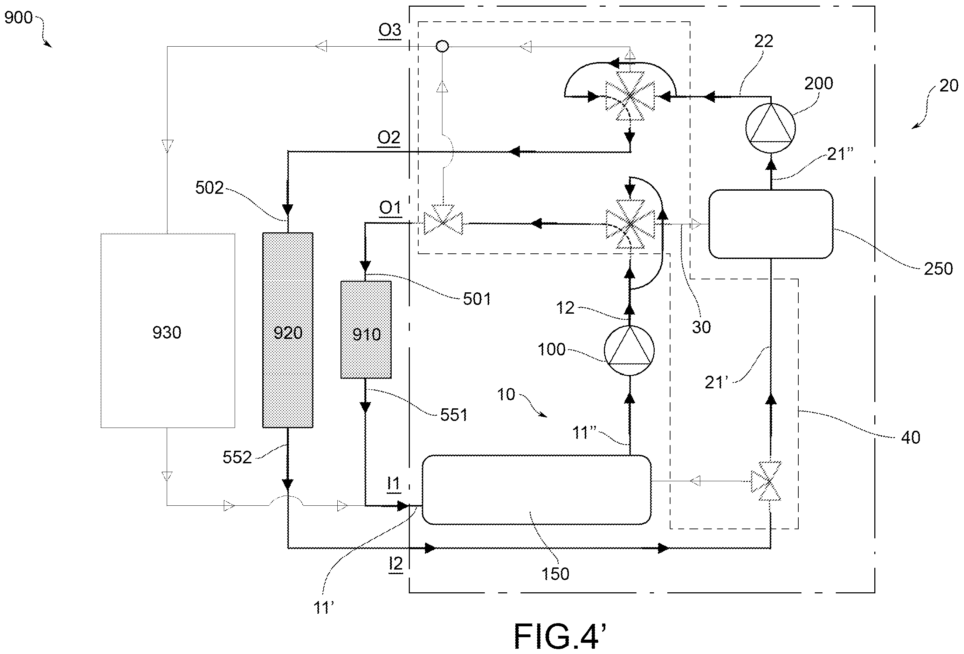

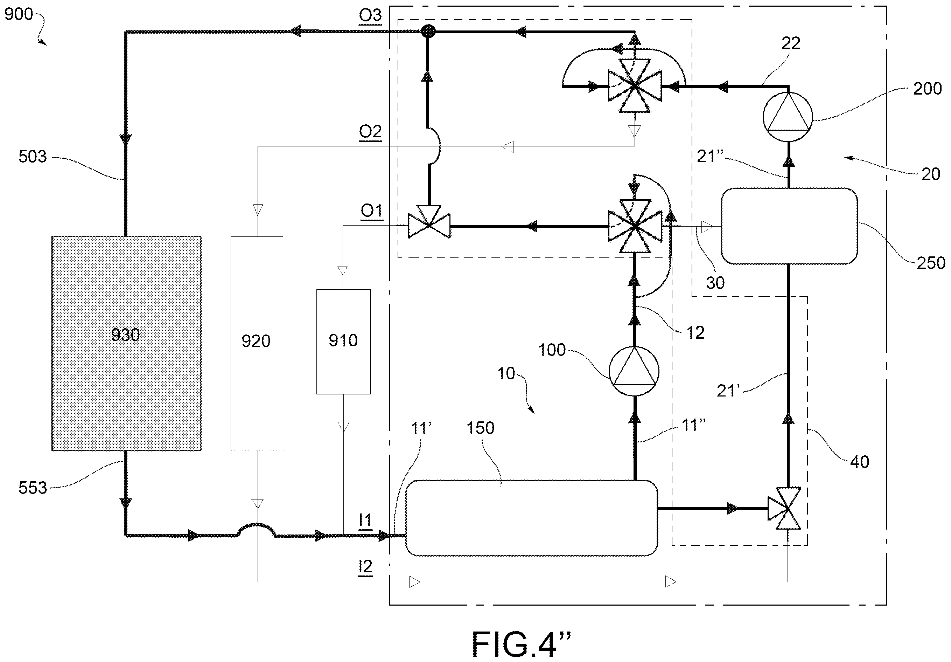

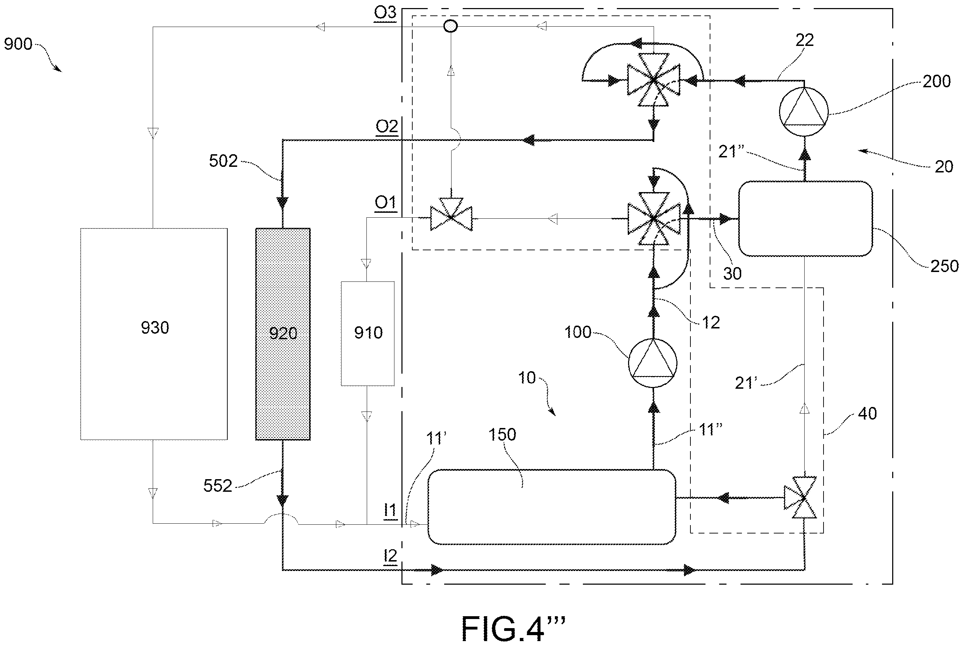

Preferably, the first working configuration is diagrammatically shown by way of example in figure 4'.

In the first working configuration, the fluidic control device 40 is configured to have two mutually separate fluidic circuits, suitable to supply working fluid to the first operating group 910 and the second operating group 920, respectively.

Preferably, the second working configuration is diagrammatically shown by way of example in figure 4'.

In the second working configuration, the fluidic control device 40 is configured to have the two pump groups 10, 20 operating in parallel to supply working fluid only to the third operating group 930.

Preferably, the third working configuration is diagrammatically shown by way of example in figure 4‴.

In the third working configuration, the fluidic control device 40 is configured to have the two pump groups 10, 20 which operate mutually in series to supply working fluid only to the second operating group 920.

According to a preferred embodiment, the fluidic control device 40 comprises a plurality of valve control elements 410, 420, 430, 440 fluidically positioned transversally related to a respective duct. According to the above, each working configuration corresponds to the regulation of each control valve element 410, 420, 430, 440 to a predetermined position.

In other words, the fluidic control device 40 comprises a control valve element 410, 420, 430, 440 at a respective duct, or at several ducts fluidically connected by the fluidic control device 40, or at two duct sections which are mutually separated by the fluidic control device 40.

According to a preferred embodiment, each control valve element 410, 420, 430, 440 is thus fluidically connected to a respective inlet and outlet hole for the fluidic connection. Preferably, some valve control elements are fluidically connected to more than one inlet and more than one outlet. Said inlet and outlet holes are, as shown in the appended figures, included in the fluidic control device 40 itself, e.g. in the device body 46 described below.

According to a preferred embodiment, each valve control element 410, 420, 430, 440 comprises a control axis X1-X1, X2-X2, X3-X3, X4-X4 relative to which it is regulable.

Preferably, each control valve element 410, 420, 430, 440 is regulable at a different angle relative to each respective control axis. In other words, each control valve element 410, 420, 430, 440 is positionable in a preferred angular position, in which it controls the passage of the respective amount of working fluid to a respective outlet O1, O2, O3.

Preferably, each control valve element 410, 420, 430, 440 has a control section 410', 420', 430', 440' therein, suitable to either allow or prevent the fluidic communication between at least one inlet hole with at least one outlet hole (reciprocally, fluidically connected to a respective duct or duct section) according to its positioning. Specifically, said control stretch 410', 420', 430', 440' is a passage passing through a full body. Preferably, the alignment of the control section 410', 420', 430', 440' with the respective inlet and outlet hole or holes causes the passage of working fluid; vice versa, the misalignment prevents the passage of working fluid.

Preferably, each control section 410', 420', 430', 440' extends perpendicular relative to the respective control axis X1-X1, X2-X2, X3-X3, X4-X4. Preferably, each full body of each control valve element 410, 420, 430, 440 has axial-symmetric development. Preferably, each full body of each control valve element 410, 420, 430, 440 is either cylindrical or spherical.

According to a preferred embodiment, each control section 410', 420', 430', 440' extends on a respective imaginary plane P1, P2, P3, P4. Preferably, each imaginary plane P1, P2, P3, P4 is substantially orthogonal to a respective control axis X1-X1, X2-X2, X3-X3, X4-X4.

According to a preferred embodiment, the fluidic control device 40 comprises a main axis X-X. Preferably, the fluidic control device 40 extends in length along said main axis X-X.

According to a preferred embodiment, each control axis X1-X1, X2-X2, X3-X3, X4-X4 lies on said main axis X-X. According to a preferred embodiment, each imaginary plane P1, P2, P3, P4 is orthogonal to the main axis X-X.

According to a preferred embodiment, the fluidic control device 40 comprises a main regulation member 400 comprising the control valve elements 410, 420, 430, 440 mutually, and integrally connected to one another.

Preferably, the main regulation member 400 consists of the full bodies of each control valve element 410, 420, 430, 440. In other words, the union of the full bodies of each valve control element 410, 420, 430, 440 make up the main regulation member 400.

According to a preferred embodiment, the main body 400, between one control valve element and the other, comprises sealing elements 480 suitable to keep the respective fluid amounts managed by each control valve element 410, 420, 430, 440 separated.

According to a preferred embodiment, the main regulation member 400 is shaped as a single cylinder which extends relative to the main axis X-X.

According to a preferred embodiment, the fluidic control device 40 comprises a control member 45 suitable to regulate the angular position of each control valve element 410, 420, 430, 440 relative to the respective control axis X1-X1, X2-X2, X3-X3, X4-X4.

Preferably, the control member 45 simultaneously controls the position of each valve control element 410, 420, 430, 440.

Preferably, in the embodiment with a single main regulation member 400, the union of multiple valve control elements 410, 420, 430, 440, control member 45 controls the position of the main regulation member 400 relative to the main axis X-X.

Preferably, the control member 45 is an electric motor connected to a respective inverter suitable to monitor its angular position.

According to a preferred embodiment, the thermal management assembly 1 comprises a device body 46 fluidically connected to the first outlet duct 12 and the second outlet duct 22 to receive the working fluid which flows in said ducts.

According to a preferred embodiment, the first outlet O1, the second outlet O2 and the third outlet O3 are obtained in said device body 46. The respective system inlet ducts 501, 502, 503 are connectable, through specific fittings, to said outlet ports and thus to said device body 46.

According to a preferred embodiment, the device body 46 accommodates, upstream of said ports, a plurality of control valve elements 410, 420, 430, 440. In other words, the inlet openings and outlet openings the passage of working fluid passage of which is managed by positioning the respective control valve element are obtained in the device body 46.

According to a preferred embodiment, the device body 46 is fluidically connected with the auxiliary duct 30 comprising a control valve element 430 controlled in a position in which it allows the passage of working fluid flow and a position in which it inhibits it.

In other words, the device body 46 is crossed by the aforesaid fluidic ducts, comprising the valve control elements 410, 420, 430, 440 specifically designed to manage the flow of the working fluid through either one duct or the other.

According to a preferred embodiment, the device body 46 comprises a single regulation chamber 460 which extends along the main axis X-X and houses the control valve elements 410, 420, 430, 440 mutually and integrally connected to one another. Preferably, the main regulation member 400 is accommodated in said regulation chamber 460. Preferably, said regulation chamber 460 is shaped to have the walls complementary to the main body 400. Preferably, the sealing elements 480 engage the walls delimiting the regulation chamber 460.

Furthermore, according to a preferred embodiment, the device body 46 comprises a regulation chamber 463 fluidically connected with the third outlet O3 and suitable to receive working fluid from the positioning of at least two valve control elements. In other words, in a preferred embodiment, e.g. corresponding to the second working configuration of the fluid control device 40 at least two valve control elements control the incoming working fluid flow from the first outlet duct 12 and the second outlet duct 22 towards said regulation chamber 463 and then towards the outlet O3.

Preferably, as shown by way of example, the fluidic control device 40 is extremely compact in size so that it is suitable to be accommodated in the engine compartment of a vehicle 900.

Preferably, the two pump groups have the characteristics described in document 102018000010971 by the Applicant, as also shown as an example in the appended figures.

Additionally, as already mentioned, the thermal management assembly which comprises the pump groups described above, and the fluidic control device described above is also the subject of the present invention.

Furthermore, as mentioned, the present invention also relates to the thermal regulation system 500 of a vehicle 900 which comprises said thermal management assembly 1 having the features described above. Said vehicle 900 comprises a first operating group 910, a second operating group 920, and a third operating group 930, while the thermal regulation system 500 comprises a plurality of system ducts 501, 502, 503, 551, 552, 553 suitable to be fluidically connected the first operating group 910, the second operating group 920 and the third operating group 930. Furthermore, said system ducts 501, 502, 503, 551, 552, 553 are suitable to be fluidically connected to the described thermal management assembly 1.

The present invention further relates to a vehicle 900 comprising a first operating group 910, e.g. an electric motor group, a second operating group 920, e.g. a battery group, and a third operating group 930, e.g. an endothermic engine group, and a thermal regulation system 500.

The present invention also relates to a hybrid-powered vehicle 900 which comprises a first operating group 910, which consists of an electric motor group, a second operating group 920, which consists of a battery group, and a third operating group 930, which consists of an endothermic engine group, and said thermal regulation system 500.

Innovatively, the fluidic control device, the thermal management system which comprises said management device, the thermal regulation system of a vehicle which comprises said regulation system, and the vehicle which comprises said thermal regulation system largely fulfill the purpose of the present invention by solving the problems which emerged in typical solutions of the prior art.

Indeed, advantageously, the thermal management assembly of the present invention allows the regulation of a plurality of operating groups of the vehicle.

Advantageously, the fluidic control device of the present invention allows simple management of the temperature of different operating groups of the vehicle, using only two pump groups.

Advantageously, the fluidic control device is easy to position in the vehicle, having compact dimensions and, therefore, compact overall dimensions.

Advantageously, the fluidic control device is cost-effective to manufacture.

Advantageously, the fluidic control device of the present invention manages the temperature of the vehicle in an extremely effective and flexible manner.

Advantageously, the thermal management of the present invention manages the temperature of the vehicle in a plurality of different operating conditions, i.e. both in motion and stationary.

Advantageously, the thermal management assembly is advantageously suitable, in the first configuration, to manage the temperature of both the electric motor group and the battery group, i.e. the "electric drive part" of a vehicle). In other words, in moving vehicle conditions at low rpm and/or low speeds, at which the vehicle is electrically powered, the thermal management assembly exclusively manages the temperature of said "electric drive part".

Advantageously, the thermal management assembly is suitable, in the second configuration, to manage the temperature of an operating group such as the endothermic engine group. In other words, in moving vehicle conditions at high rpm and/or high speeds, at which the vehicle is powered endothermically, the thermal management assembly exclusively manages the temperature of said "endothermic drive part".

Advantageously, the thermal management assembly is suitable, in the second configuration, to manage the temperature of an operating group such as the endothermic engine group by virtue of a double working fluid flow.

Advantageously, the thermal management assembly is suitable in the third configuration to cool an operating group with high load losses, such as the battery pack, by virtue of a double head.

Advantageously, in such a configuration, the temperature of the battery group is managed separately from the temperature management of the electric motor group and the endothermic engine group; e.g., such a configuration is applied in situations in which the vehicle is stationary, e.g. during the charging of the battery group, or during the ignition of the vehicle and the battery group.

Advantageously, the management of flows in ducts and circuits is extremely simplified.

Advantageously, with simple rotational operations, the fluidic control device is suitable to go from one configuration to another. Advantageously, with a single rotational operation, the fluidic control device is configurable in the desired working configuration.

It is apparent that, in order to meet contingent needs, those skilled in the art can make changes to the fluidic control device, the thermal management system, and the thermal regulation system, as well as the vehicle, all of which are contained within the scope of protection as defined in the following claims.

## Claims

1. A fluidic control device (40) of a thermal management assembly (1) of a thermal control system (500) of a vehicle (900), wherein said vehicle (900) comprises a first operating group (910), a second operating group (920), a third operating group (930) fluidically connected to said thermal management assembly (1), wherein said thermal management assembly (1) comprises:
i) a first pump group (10) which comprises a first inlet duct (11) and a first outlet duct (12);
ii) a second pump group (20) which comprises a second inlet duct (21) and a second outlet duct (22);
iii) an auxiliary duct (30) which fluidically connects the first pump group (10) and the second pump group (20); wherein the fluidic control device (40) is fluidically connected with the first pair of ducts (11; 12) with the second pair of ducts (21; 22) and with the auxiliary duct (30) and comprises a first outlet (O1), a second outlet (O2) and a third outlet (O3), respectively connectable with the first operating group (910), with the second operating group (920) and with the third operating group (930);
wherein the fluidic control device (40) is configurable in:
- a first working configuration in which the flow of the working fluid is regulated through the first outlet (O1) and through the second outlet (O2) respectively, preventing the working fluid from flowing through the third outlet (O3) and through the auxiliary duct (30);
- a second working configuration in which the flow of the working fluid is regulated through the third outlet (O3) preventing the flow of the working fluid through the first outlet (O1) the second outlet (O2) and through the auxiliary duct (30);
- a third working configuration in which the flow of the working fluid is regulated through the auxiliary duct (30) and the sliding of the working fluid exiting through the first outlet (O1) is regulated, preventing the flow of the working fluid through the second outlet (O2) and through the third outlet (O3);
wherein the fluidic control device (40) comprises a plurality of valve control elements (410; 420; 430; 440) fluidically positioned transversely to a respective duct, wherein each working configuration corresponds to the regulation of each control valve element (410; 420; 430; 440) in a predefined position; wherein each control valve element (410; 420; 430; 440) comprises a control axis (X1-X1; X2-X2; X3-X3; X4- X4) and each control valve element (410; 420; 430; 440) is adjustable in a different angular position with respect to each respective control axis (X1-X1; X2-X2; X3-X3; X4-X4);
wherein the fluidic control device (40) is **characterized in that**, also, comprises a control member (45) suitable to adjust the angular position of each one of the control valve elements (410; 420; 430; 440) with respect to the respective control axis (X1-X1; X2-X2; X3-X3; X4-X4).

2. Fluidic control device (40) according to claim 1, comprising a main axis (X-X), wherein each control axis (X1-X1; X2-X2; X3-X3; X4-X4) lies on said main axis (X-X) .

3. Fluidic control device (40) according to any one of preceding claims, comprising a main adjustment member (400) comprising, mutually integrally connected to each other, the control valve elements (410; 420; 430; 440).

4. Fluidic control device (40) according to any one of preceding claims, wherein each control valve element (410; 420; 430; 440) has a control section (410', 420', 430', 440') therein through which the working fluid flows and as a function of the angular position of the control valve element (410; 420; 430; 440) allows or inhibits the fluid communication between at least one inlet opening with at least an outlet opening.

5. Fluidic control device (40) according to any one of preceding claims, comprising a device body (46) in which the first outlet (O1), the second outlet (O2) are formed and the third outlet (O3), wherein the device body (46) houses, upstream of said outlets, said plurality of control valve elements (410; 420; 430; 440), wherein the device body (46) also includes inlet openings and fluidic connection outlet openings with the control valve elements (410; 420; 430; 440).

6. Fluidic control device (40) according to claim 5, wherein the device body (46) is fluidically connected with the auxiliary duct (30) comprising a control valve element (430) controllable in a position in which it allows the passage of working fluid flow and a position in which it inhibits it.

7. Fluidic control device (40) according to claim 5 or 6, wherein the device body (46) comprises a regulation chamber (463) fluidically connected with the third outlet (O3) and suitable for receiving working fluid from the positioning of at least two valve control elements.

8. Fluidic control device (40) according to any one of the claims from 5 or 7, in combination with claim 3, wherein the device body (46) comprises a single regulation chamber (460) which extends along the main axis (X-X) and houses the control valve elements (410; 420; 430; 440) mutually integrally connected to each other.

9. A thermal management assembly (1) of a thermal control system (500) of a vehicle (900), wherein said vehicle (900) comprises a first operating group (910), a second operating group (920), a third operating group (930) fluidically connectable to said thermal management assembly (1), wherein the thermal management assembly (1) comprises:
i) a first pump assembly (10) suitable to control the movement of the working fluid in the thermal management assembly comprising a first inlet duct (11) and a first outlet duct (12);
ii) a second pump group (20) suitable, in turn, for controlling the movement of the working fluid in the thermal management assembly (1) comprising a second inlet duct (21) and a second outlet duct (22);
iii) an auxiliary duct (30) which fluidically connects the first pump group (10) and the second pump group (20);
iv) a first inlet (I1) and a second inlet (I2) respectively fluidically connected with the first inlet duct (11) and with the second inlet duct (21);
v) a fluidic control device (40) according to any one of the preceding claims.

10. A thermal control system (500) of a vehicle (900), wherein said vehicle (900) comprises a first operating group (910), a second operating group (920), a third operating group (930), wherein said thermal regulation system (500) comprises:
- a plurality of system ducts (501; 502; 503; 551; 552; 553) fluidically connected to a first operating group (910), a second operating group (920), a third operating group (930); and
- a thermal management assembly (1) fluidically connected with said system ducts (501; 502; 503; 551; 552; 553) according to claim 9.

11. Vehicle (900) comprising a first operating group (910), for example an electric motor group, a second operating group (920), for example a battery group, and a third operating group (930), for example an endothermic motor group, and a thermal regulation system (500) according to claim 10.

12. Hybrid-powered vehicle (900), according to claim 11, comprising a first operating group (910) of the type comprising an electric motor group, a second operating group (920) of the type comprising a battery group, a third operating group (930) of the type comprising an endothermic motor group.

## Patentansprüche

1. Fluidiksteuervorrichtung (40) einer Wärmeverwaltungsbaugruppe (1) eines Wärmesteuersystems (500) eines Fahrzeugs (900), wobei das Fahrzeug (900) eine erste Betriebsgruppe (910), eine zweite Betriebsgruppe (920) und eine dritte Betriebsgruppe (930) aufweist, die mit der Wärmeverwaltungsbaugruppe (1) fluidisch verbunden sind, wobei die Wärmeverwaltungsbaugruppe (1) aufweist:
i) eine erste Pumpengruppe (10), die einen ersten Einlasskanal (11) und einen ersten Auslasskanal (12) aufweist;
ii) eine zweite Pumpengruppe (20), die einen zweiten Einlasskanal (21) und einen zweiten Auslasskanal (22) aufweist;
iii) einen Hilfskanal (30), der die erste Pumpengruppe (10) und die zweite Pumpengruppe (20) fluidisch verbindet;
wobei die Fluidiksteuervorrichtung (40) mit dem ersten Paar Kanälen (11; 12), mit dem zweiten Paar Kanälen (21; 22) und mit dem Hilfskanal (30) fluidisch verbunden ist und einen ersten Auslass (01), einen zweiten Auslass (O2) und einen dritten Auslass (O3) aufweist, die jeweils mit der ersten Betriebsgruppe (910), mit der zweiten Betriebsgruppe (920) und mit der dritten Betriebsgruppe (930) verbindbar sind;
wobei die Fluidiksteuervorrichtung (40) konfigurierbar ist in:
- einer ersten Arbeitskonfiguration, bei der die Strömung des Arbeitsfluids durch den ersten Auslass (01) bzw. durch den zweiten Auslass (O2) geregelt wird, wodurch verhindert wird, dass das Arbeitsfluid durch den dritten Auslass (O3) und durch den Hilfskanal (30) strömt;
- eine zweite Arbeitskonfiguration, bei der die Strömung des Arbeitsfluids durch den dritten Auslass (O3) geregelt wird, wodurch die Strömung des Arbeitsfluids durch den ersten Auslass (01), den zweiten Auslass (O2) und durch den Hilfskanal (30) verhindert wird;
- eine dritte Arbeitskonfiguration, bei der die Strömung des Arbeitsfluids durch den Hilfskanal (30) reguliert wird und das Gleiten des durch den ersten Auslass (01) austretenden Arbeitsfluids reguliert wird, wodurch die Strömung des Arbeitsfluids durch den zweiten Auslass (O2) und durch den dritten Auslass (O3) verhindert wird;
wobei die Fluidiksteuervorrichtung (40) eine Vielzahl von Ventilsteuerelementen (410; 420; 430; 440) aufweist, die quer zu einem jeweiligen Kanal fluidisch positioniert sind, wobei jede Arbeitskonfiguration der Regelung jedes Steuerventilelements (410; 420; 430; 440) in einer vordefinierten Position entspricht; wobei jedes Steuerventilelement (410; 420; 430; 440) eine Steuerachse (X1-X1; X2-X2; X3-X3; X4-X4) aufweist und jedes Steuerventilelement (410; 420; 430; 440) in einer unterschiedlichen Winkelposition in Bezug auf jede jeweilige Steuerachse (X1-X1; X2-X2; X3-X3; X4-X4) einstellbar ist;
wobei die Fluidiksteuervorrichtung (40) **dadurch gekennzeichnet ist, dass** sie zudem ein Steuerelement (45) aufweist, das geeignet ist, die Winkelposition jedes der Steuerventilelemente (410; 420; 430; 440) in Bezug auf die jeweilige Steuerachse (X1-X1; X2-X2; X3-X3; X4-X4) einzustellen.

2. Fluidiksteuervorrichtung (40) nach Anspruch 1, aufweisend eine Hauptachse (X-X), wobei jede Steuerachse (X1-X1; X2-X2; X3-X3; X4-X4) auf der Hauptachse (X-X) liegt.

3. Fluidiksteuervorrichtung (40) nach einem der vorstehenden Ansprüche, aufweisend ein Haupteinstellelement (400), das die Steuerventilelemente (410; 420; 430; 440) aufweist, die einstückig miteinander verbunden sind.

4. Fluidiksteuervorrichtung (40) nach einem der vorstehenden Ansprüche, wobei jedes Steuerventilelement (410; 420; 430; 440) einen Steuerabschnitt (410', 420', 430', 440') darin aufweist, durch den das Arbeitsfluid strömt und der in Abhängigkeit von der Winkelposition des Steuerventilelements (410; 420; 430; 440) die Fluidkommunikation zwischen zumindest einer Einlassöffnung und zumindest einer Auslassöffnung ermöglicht oder verhindert.

5. Fluidiksteuervorrichtung (40) nach einem der vorstehenden Ansprüche, aufweisend einen Vorrichtungskörper (46), in dem der erste Auslass (01), der zweite Auslass (O2) und der dritte Auslass (O3) ausgebildet sind, wobei der Vorrichtungskörper (46) stromaufwärts der Auslässe die Vielzahl von Steuerventilelementen (410; 420; 430; 440) aufnimmt, wobei der Vorrichtungskörper (46) zudem Einlassöffnungen und Fluidikverbindungsauslassöffnungen mit den Steuerventilelementen (410; 420; 430; 440) aufweist.

6. Fluidiksteuervorrichtung (40) nach Anspruch 5, wobei der Vorrichtungskörper (46) mit dem Hilfskanal (30) fluidisch verbunden ist, der ein Steuerventilelement (430) aufweist, das in einer Position, in der es den Durchgang des Arbeitsfluids ermöglicht, und einer Position, in der es diesen sperrt, steuerbar ist.

7. Fluidiksteuervorrichtung (40) nach Anspruch 5 oder 6, wobei der Vorrichtungskörper (46) eine Regelkammer (463) aufweist, die mit dem dritten Auslass (O3) fluidisch verbunden und geeignet ist, Arbeitsfluid aus der Positionierung von zumindest zwei Steuerventilelementen aufzunehmen.

8. Fluidiksteuervorrichtung (40) nach einem der Ansprüche 5 oder 7 in Kombination mit Anspruch 3, wobei der Vorrichtungskörper (46) eine einzelne Regelkammer (460) aufweist, die sich entlang der Hauptachse (X-X) erstreckt und die Steuerventilelemente (410; 420; 430; 440) aufnimmt, die einstückig miteinander verbunden sind.

9. Wärmeverwaltungsbaugruppe (1) eines Wärmesteuersystems (500) eines Fahrzeugs (900), wobei das Fahrzeug (900) eine erste Betriebsgruppe (910), eine zweite Betriebsgruppe (920) und eine dritte Betriebsgruppe (930) aufweist, die mit der Wärmeverwaltungsbaugruppe (1) fluidisch verbindbar sind, wobei die Wärmeverwaltungsbaugruppe (1) aufweist:
i) eine erste Pumpenbaugruppe (10), die geeignet ist, die Bewegung des Arbeitsfluids in der Wärmeverwaltungsbaugruppe zu steuern, und einen ersten Einlasskanal (11) und einen ersten Auslasskanal (12) aufweist;
ii) eine zweite Pumpengruppe (20), die ihrerseits geeignet ist, die Bewegung des Arbeitsfluids in der Wärmeverwaltungsbaugruppe (1) zu steuern, und einen zweiten Einlasskanal (21) und einen zweiten Auslasskanal (22) aufweist;
iii) einen Hilfskanal (30), der die erste Pumpengruppe (10) und die zweite Pumpengruppe (20) fluidisch verbindet;
iv) einen ersten Einlass (I1) und einen zweiten Einlass (I2), die mit dem ersten Einlasskanal (11) bzw. mit dem zweiten Einlasskanal (21) fluidisch verbunden sind;
v) eine Fluidiksteuervorrichtung (40) nach einem der vorstehenden Ansprüche.

10. Wärmesteuersystem (500) eines Fahrzeugs (900), wobei das Fahrzeug (900) eine erste Betriebsgruppe (910), eine zweite Betriebsgruppe (920), eine dritte Betriebsgruppe (930) aufweist, wobei das Wärmeregelsystem (500) aufweist:
- eine Vielzahl von Systemkanälen (501; 502; 503; 551; 552; 553), die mit einer ersten Betriebsgruppe (910), einer zweiten Betriebsgruppe (920) und einer dritten Betriebsgruppe (930) fluidisch verbunden sind; und
- eine Wärmeverwaltungsbaugruppe (1), die mit den Systemkanälen (501; 502; 503; 551; 552; 553) fluidisch verbunden ist, nach Anspruch 9.

11. Fahrzeug (900), aufweisend eine erste Betriebsgruppe (910), zum Beispiel eine Elektromotorgruppe, eine zweite Betriebsgruppe (920), zum Beispiel eine Batteriegruppe, und eine dritte Betriebsgruppe (930), zum Beispiel eine endotherme Motorgruppe, und ein Wärmeregelsystem (500) nach Anspruch 10.

12. Hybridfahrzeug (900) nach Anspruch 11, aufweisend eine erste Betriebsgruppe (910) des Typs, der eine Elektromotorgruppe umfasst, eine zweite Betriebsgruppe (920) des Typs, der eine Batteriegruppe umfasst, eine dritte Betriebsgruppe (930) des Typs, der eine endotherme Motorgruppe umfasst.

## Revendications

1. Dispositif de commande fluidique (40) d'un ensemble de gestion thermique (1) d'un système de commande thermique (500) d'un véhicule (900), dans lequel ledit véhicule (900) comprend un premier groupe de fonctionnement (910), un deuxième groupe de fonctionnement (920), un troisième groupe de fonctionnement (930) reliés de manière fluidique audit ensemble de gestion thermique (1), dans lequel ledit ensemble de gestion thermique (1) comprend :
i) un premier groupe de pompe (10) qui comprend un premier conduit d'entrée (11) et un premier conduit de sortie (12) ;
ii) un deuxième groupe de pompe (20) qui comprend un deuxième conduit d'entrée (21) et un deuxième conduit de sortie (22) ;
iii) un conduit auxiliaire (30) qui relie de manière fluidique le premier groupe de pompe (10) et le deuxième groupe de pompe (20) ; dans lequel le dispositif de commande fluidique (40) est relié de manière fluidique à la première paire de conduits (11 ; 12) à la deuxième paire de conduits (21 ; 22) et au conduit auxiliaire (30) et comprend une première sortie (01), une deuxième sortie (O2) et une troisième sortie (O3), pouvant être respectivement reliées au premier groupe de fonctionnement (910), au deuxième groupe de fonctionnement (920) et au troisième groupe de fonctionnement (930) ;
dans lequel le dispositif de commande fluidique (40) peut être configuré dans :
- une première configuration de travail dans laquelle le débit du fluide de travail est régulé à travers la première sortie (01) et à travers la deuxième sortie (O2) respectivement, empêchant le fluide de travail de s'écouler par la troisième sortie (O3) et par le conduit auxiliaire (30) ;
- une deuxième configuration de travail dans laquelle le débit du fluide de travail est régulé à travers la troisième sortie (O3) empêchant l'écoulement du fluide de travail à travers la première sortie (01), la deuxième sortie (O2) et à travers le conduit auxiliaire (30) ;
- une troisième configuration de travail dans laquelle le débit du fluide de travail est régulé à travers le conduit auxiliaire (30) et le glissement du fluide de travail sortant par la première sortie (01) est régulé, empêchant l'écoulement du fluide de travail à travers la deuxième sortie (O2) et à travers la troisième sortie (O3) ;
dans lequel le dispositif de commande fluidique (40) comprend une pluralité d'éléments de soupape de commande (410 ; 420 ; 430 ; 440) positionnés de manière fluidique transversalement à un conduit respectif, dans lequel chaque configuration de travail correspond à la régulation de chaque élément de soupape de commande (410 ; 420 ; 430 ; 440) dans une position prédéfinie ; dans lequel chaque élément de soupape de commande (410 ; 420 ; 430 ; 440) comprend un axe de commande (X1-X1 ; X2-X2 ; X3-X3 ; X4-X4) et chaque élément de soupape de commande (410 ; 420 ; 430 ; 440) est réglable dans une position angulaire différente par rapport à chaque axe de commande respectif (X1-X1 ; X2-X2 ; X3-X3 ; X4-X4) ;
dans lequel le dispositif de commande fluidique (40) est **caractérisé en ce qu'**il comprend également un organe de commande (45) adapté pour régler la position angulaire de chacun des éléments de soupape de commande (410 ; 420 ; 430 ; 440) par rapport à l'axe de commande respectif (X1-X1 ; X2-X2 ; X3-X3 ; X4-X4).

2. Dispositif de commande fluidique (40) selon la revendication 1, comprenant un axe principal (X-X), dans lequel chaque axe de commande (X1-X1 ; X2-X2 ; X3-X3 ; X4-X4) se trouve sur ledit axe principal (X-X).

3. Dispositif de commande fluidique (40) selon l'une quelconque des revendications précédentes, comprenant un organe de réglage principal (400) comprenant les éléments de soupape de commande (410 ; 420 ; 430 ; 440) mutuellement solidairement connectés les uns des autres.

4. Dispositif de commande fluidique (40) selon l'une quelconque des revendications précédentes, dans lequel chaque élément de soupape de commande (410 ; 420 ; 430 ; 440) a une section de commande (410', 420', 430', 440') dans celui-ci à travers laquelle circule le fluide de travail et permet ou interdit, en fonction de la position angulaire de l'élément de soupape de commande (410 ; 420 ; 430 ; 440) la communication fluidique entre au moins une ouverture d'entrée avec au moins une ouverture de sortie.

5. Dispositif de commande fluidique (40) selon l'une quelconque des revendications précédentes, comprenant un corps de dispositif (46) dans lequel la première sortie (01), la deuxième sortie (O2) sont formées et la troisième sortie (O3), dans lequel le corps de dispositif (46) abrite, en amont desdites sorties, ladite pluralité d'éléments de soupape de commande (410 ; 420 ; 430 ; 440), dans lequel le corps de dispositif (46) comporte également des ouvertures d'entrée et des ouvertures de sortie de liaison fluidique avec les éléments de soupape de commande (410 ; 420 ; 430 ; 440).

6. Dispositif de commande fluidique (40) selon la revendication 5, dans lequel le corps de dispositif (46) est relié de manière fluidique au conduit auxiliaire (30) comprenant un élément de soupape de commande (430) pouvant être commandé dans une position dans laquelle il permet le passage de l'écoulement de fluide de travail et une position dans laquelle il l'inhibe.

7. Dispositif de commande fluidique (40) selon la revendication 5 ou 6, dans lequel le corps de dispositif (46) comprend une chambre de régulation (463) reliée de manière fluidique à la troisième sortie (O3) et adaptée pour recevoir un fluide de travail issu du positionnement d'au moins deux éléments de soupape de commande.

8. Dispositif de commande fluidique (40) selon l'une quelconque des revendications 5 ou 7, en combinaison avec la revendication 3, dans lequel le corps de dispositif (46) comprend une seule chambre de régulation (460) qui s'étend selon l'axe principal (X-X) et loge les éléments de soupape de commande (410 ; 420 ; 430 ; 440) mutuellement solidairement connectés les uns aux autres.

9. Ensemble de gestion thermique (1) d'un système de commande thermique (500) d'un véhicule (900), dans lequel ledit véhicule (900) comprend un premier groupe de fonctionnement (910), un deuxième groupe de fonctionnement (920), un troisième groupe de groupe de fonctionnement (930) pouvant être reliés de manière fluidique audit ensemble de gestion thermique (1), dans lequel l'ensemble de gestion thermique (1) comprend :
i) un premier ensemble de pompe (10) adapté pour commander le mouvement du fluide de travail dans l'ensemble de gestion thermique comprenant un premier conduit d'entrée (11) et un premier conduit de sortie (12) ;
ii) un deuxième groupe de pompe (20) adapté, à son tour, pour commander le mouvement du fluide de travail dans l'ensemble de gestion thermique (1) comprenant un deuxième conduit d'entrée (21) et un deuxième conduit de sortie (22) ;
iii) un conduit auxiliaire (30) qui relie de manière fluidique le premier groupe de pompe (10) et le deuxième groupe de pompe (20) ;
iv) une première entrée (I1) et une deuxième entrée (12) reliées de manière fluidique respectivement au premier conduit d'entrée (11) et au deuxième conduit d'entrée (21) ;
v) un dispositif de commande fluidique (40) selon l'une quelconque des revendications précédentes.

10. Système de commande thermique (500) d'un véhicule (900), dans lequel ledit véhicule (900) comprend un premier groupe de fonctionnement (910), un deuxième groupe de fonctionnement (920), un troisième groupe de fonctionnement (930), dans lequel ledit système de régulation (500) comprend :
- une pluralité de conduits de système (501 ; 502 ; 503 ; 551 ; 552 ; 553) reliés de manière fluidique à un premier groupe de fonctionnement (910), un deuxième groupe de fonctionnement (920), un troisième groupe de fonctionnement (930) ; et
- un ensemble de gestion thermique (1) relié de manière fluidique auxdits conduits de système (501; 502; 503 ; 551; 552 ; 553) selon la revendication 9.

11. Véhicule (900) comprenant un premier groupe de fonctionnement (910), par exemple un groupe moteur électrique, un deuxième groupe de fonctionnement (920), par exemple un groupe de batterie, et un troisième groupe de fonctionnement (930), par exemple un groupe moteur endothermique, et un système de régulation thermique (500) selon la revendication 10.

12. Véhicule à propulsion hybride (900), selon la revendication 11, comprenant un premier groupe de fonctionnement (910) du type comprenant un groupe moteur électrique, un deuxième groupe de fonctionnement (920) du type comprenant un groupe de batterie, un troisième groupe de fonctionnement (930) du type comprenant un groupe moteur endothermique.
